# FASCICULE DE BREVET EUROPEEN

(11) **EP 1 893 901 B1**
(45) Date de publication et mention de la délivrance du brevet: **05.10.2011**
(21) Numéro de dépôt: 06764786.7
(22) Date de dépôt: 14.06.2006
(51) Int. Cl.: F16L 3/12, E04G 21/18

(54) **SUPPORT DE COFFRAGE ET DE TRAVERSEE POUR CONDUITS, CABLES ET GAINES FLEXIBLES**
SCHALUNGS- UND PASSIERTRÄGER FÜR LEITUNGEN, KABEL UND FLEXIBLE SCHLÄUCHE
SUPPORT FOR SHUTTERING AND PASSING THROUGH A CONDUIT, CABLE AND A FLEXIBLE HOSE

(30) Priorité: 15.06.2005 FR 0506073
(43) Date de publication de la demande: 05.03.2008
(73) Titulaire: Tolemecane SAS, 93230 Romainville (FR)
(72) Inventeur: CHAZAL, Marc, F-75007 Paris (FR)
(74) Mandataire: Metz, Paul
(86) Numéro de dépôt international: PCT/FR2006/001338
(87) Numéro de publication internationale: WO 2006/134266

(56) Documents cités:
- EP-A- 0 943 745
- DE-A1- 4 234 892
- FR-A- 2 663 398
- US-A- 2 165 882
- US-A- 4 641 478

## Description

La présente invention concerne un support de coffrage et de traversée d'une paroi pour les gaines d'un réseau de distribution de fluides ou d'énergie notamment dans le domaine du bâtiment.

L'invention se rapporte plus particulièrement à un support en tôle pliée permettant de faire traverser une paroi notamment horizontale par exemple en béton à des conduites, des canalisations, des câbles et des gaines flexibles depuis une position horizontale jusqu'à une position verticale de traversée.

Lors de la construction ou de la rénovation de bâtiments, il est souvent nécessaire de faire passer des conduites, des canalisations, des câbles ou des gaines à travers une chape ou un plancher en béton. Afin de regrouper toutes ces conduites, canalisations, câbles et gaines disponibles au même endroit, et pour des raisons de gain de place, cette traversée se fait généralement à angle droit, dans un volume le plus faible possible.

Les conduites, canalisations, câbles et gaines présentant généralement une faible flexibilité, il est nécessaire de prévoir un moyen permettant de maintenir ces derniers coudés, par exemple à 90° dans un espace restreint nécessaire à leur changement de direction et à leur sortie verticale.

Les ouvriers du bâtiment réalisent encore actuellement habituellement un coffrage en bois ou en blocs de polystyrène aux dimensions particulières de chaque traversée. Ce coffrage permet de former et de réserver un volume restant libre pour la montée et la sortie des gaines après confection de la chape en béton.

Ce coffrage est de réalisation fastidieuse et ne remplit pas toujours entièrement les fonctions escomptées tout en nécessitant un temps de main d'oeuvre important.

Il existe donc un besoin pour un support de coffrage et de traversée permettant de supporter et de caler, lorsqu'elles sont coudées, les conduites, canalisations, câbles et gaines des réseaux de distribution de fluide et d'énergie dans le bâtiment avant et après coulage de la chape.

Pour résoudre ce problème technique, plusieurs dispositifs ont déjà été envisagés. Par la demande de brevet européen n° EP 0 372 301 et la demande PCT n° WO 90/10169 on connaît des dispositifs en forme de coude permettant de guider un tuyau flexible en arc de cercle à travers une dalle en béton. Ces dispositifs ne sont pas avantageux en ce que le nombre et la taille des conduits, canalisations ou gaines flexibles guidés par ceux-ci sont limités par le diamètre et le nombre de pièces coudées prévues. De plus, leur réalisation est généralement complexe et onéreuse. En outre, ces dispositifs ne présentent pas de flancs droits orthogonaux permettant de constituer des surfaces de coffrage ou de participer au positionnement d'éléments de coffrage.

On connaît, notamment par le brevet FR 2 663 398, des dispositifs de maintien et de coffrage permettant de faire passer des conduites, canalisations, câbles et gaines à travers un coffrage en béton tout en participant à la réalisation de ce même coffrage.

Il existe ainsi un besoin pour un dispositif permettant de maintenir cintrés des conduites, canalisations, câbles et gaines par exemple à 90° d'angle dans un espace le plus faible possible et capable en outre de constituer des surfaces de coffrage ou de participer au positionnement d'éléments de coffrage.

Avec ce dispositif on doit pouvoir maintenir coudés dans un volume réduit un grand nombre de conduites, canalisations, câbles et gaines, de diamètres différents.

Avantageusement, ce dispositif est de réalisation simple et peu onéreuse, et d'une mise en oeuvre simple, rapide, pratique et sûre.

Pour résoudre ce problème technique, le support de coffrage et de traversée selon l'invention comprend des volets en équerre, volets parmi lesquels deux volets sensiblement perpendiculaires présentent des indentations par exemple de forme triangulaire permettant de maintenir des conduites, canalisations, câbles et gaines de différents diamètres.

Ces indentations peuvent être conformées dans une ouverture pratiquée dans au moins un des volets sensiblement perpendiculaires, cette ouvertures présentant alors une taille suffisante pour le passage de plusieurs conduites, canalisations, câbles et gaines.

Ces indentations peuvent également être conformées au niveau de l'extrémité d'au moins un des volets sensiblement perpendiculaires, celui-ci ne présentant alors pas d'ouverture.

Le support de coffrage et de traversée selon l'invention peut comprendre trois volets en équerre formant une marche d'escalier dont deux volets consécutifs présentent une ouverture pour le passage des conduites, canalisations, câbles et gaines. Ces deux volets sont perpendiculaires entre eux, pour permettre de couder les conduites, canalisations, câbles et gaines dans un volume délimité par la projection des deux ouvertures.

Le support de coffrage et de traversée selon l'invention peut également comprendre quatre volets dont les deux volets d'extrémité présentent des indentations conformées au niveau de leur extrémité, formant un volume ouvert entre les indentations pour le passage des conduites, canalisations, câbles et gaines.

Un des volets peut présenter au moins une ouverture pour former une surface affleurante avec la structure d'appui du support selon l'invention par exemple le treillis d'armature de la chape alors que le volet supérieur permet de caler l'ensemble contre la surface adjacente.

Des perçages dans le volet inférieur permettent le passage d'éléments de fixation, tels que des clous ou des vis pour immobiliser le support selon l'invention sur la surface sur laquelle il doit être fixé.

Des ailes ou des rabats de forme spécifique prévus dans les bords latéraux peuvent servir de moyens de calage et de fixation de la pièce de traversée contre une surface verticale, telle qu'un mur ou un élément de coffrage.

L'ensemble du support de coffrage et de traversée selon l'invention est préférentiellement réalisé en tôle métallique découpée. Sa confection est donc aisée, rapide et peu coûteuse. Il en est de même lorsqu'il est réalisé en matière plastique.

Après pliage sensiblement d'équerre des différents volets qui le constituent, le support de coffrage et de traversée est prêt à être utilisé. Sa mise en oeuvre est simple, aisée, rapide, pratique et sûre.

D'autres caractéristiques et avantages de l'invention apparaîtront à la lecture de la description détaillée qui va suivre, description faite en référence aux dessins annexés, dans lesquels :
- la figure 1 est une vue générale en coupe montrant un exemple d'implantation du support de coffrage et de traversée selon l'invention,
- la figure 2 est une vue d'ensemble en perspective d'un support de coffrage et de traversée selon une première variante de l'invention ;
- la figure 3 est une vue d'ensemble en perspective du support de coffrage et de traversée selon la première variante de l'invention portant un conduit et une gaine déviés vers le haut par cintrage et immobilisés dans cette position ;
- la figure 4 est une vue d'ensemble en perspective du support de coffrage et de traversée selon la première variante de l'invention posé sur un treillis d'armature d'une chape ;
- la figure 5 est une vue en plan du support de coffrage et de traversée selon la première variante de l'invention dans sa configuration à plat ;
- la figure 6 est une vue schématique frontale montrant le calage d'une gaine annelée dans une découpe d'immobilisation de forme triangulaire ;
- la figure 7 est une vue schématique de profil au niveau de la découpe d'immobilisation de la figure 6 montrant le calage d'une gaine annelée ;
- la figure 8 est une vue d'ensemble en perspective d'un support de coffrage et de traversée selon une seconde variante de l'invention ;
- la figure 9 est une vue d'ensemble en perspective du support de coffrage et de traversée selon la seconde variante de l'invention portant un conduit et une gaine déviés vers le haut par cintrage et immobilisés dans cette position ; et
- la figure 10 est une vue en plan du support de coffrage et de traversée selon la seconde variante de l'invention dans sa configuration à plat.

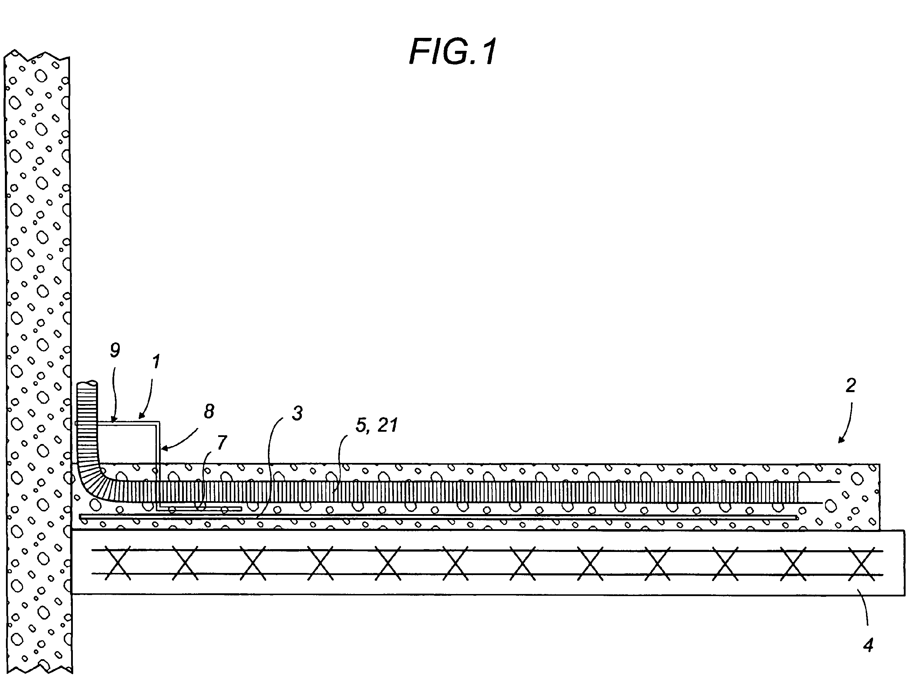

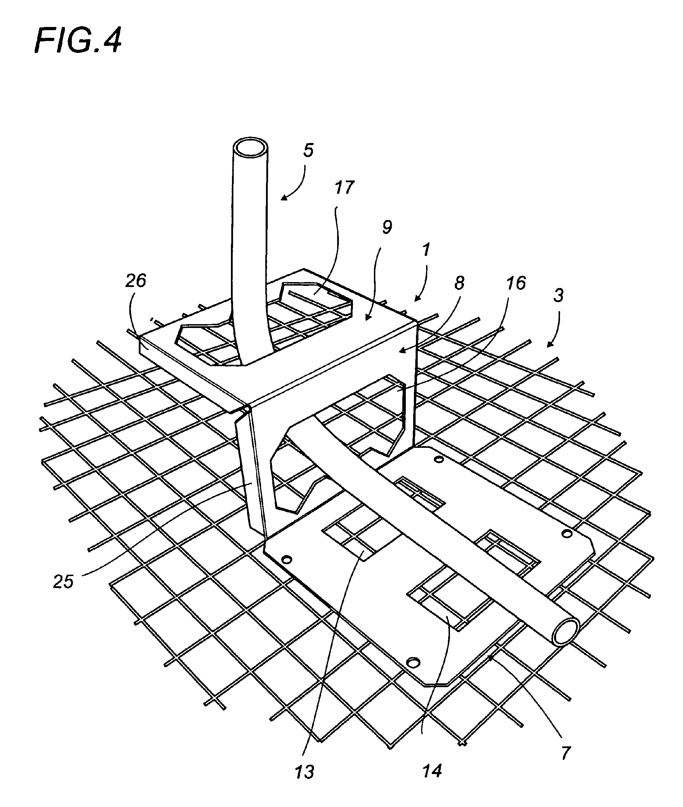

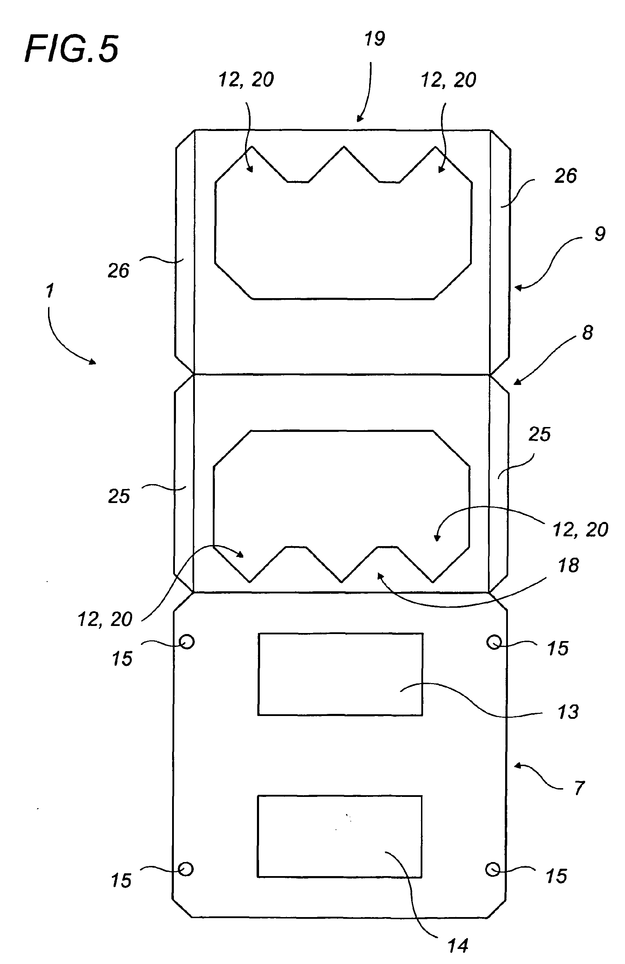

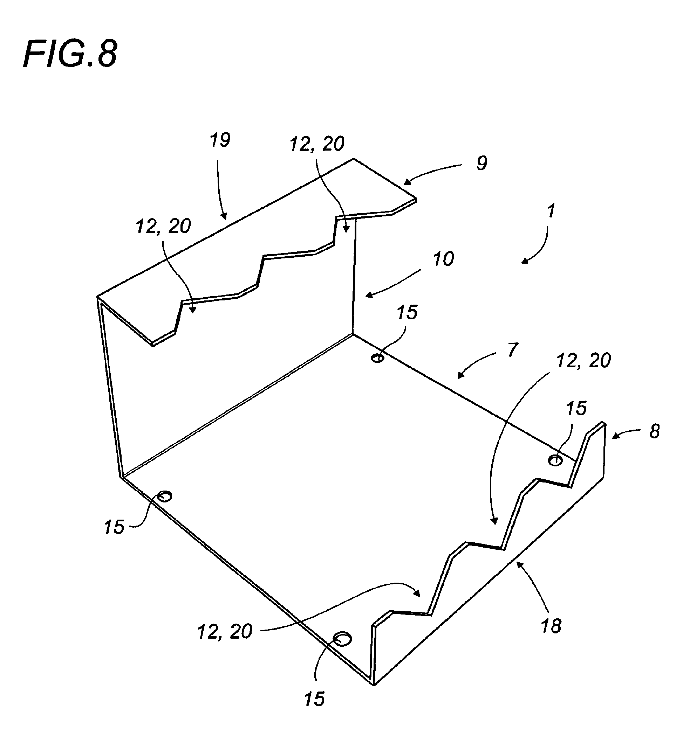

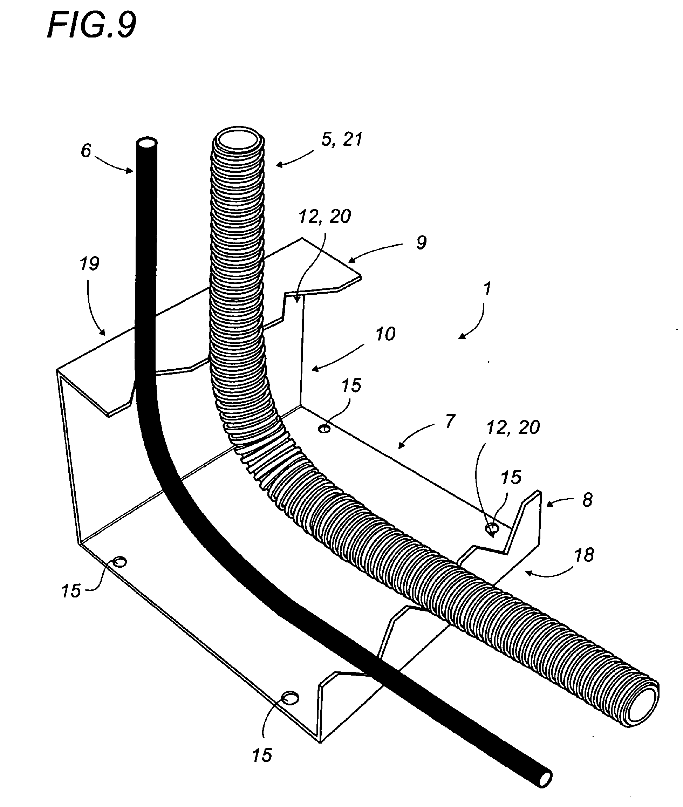

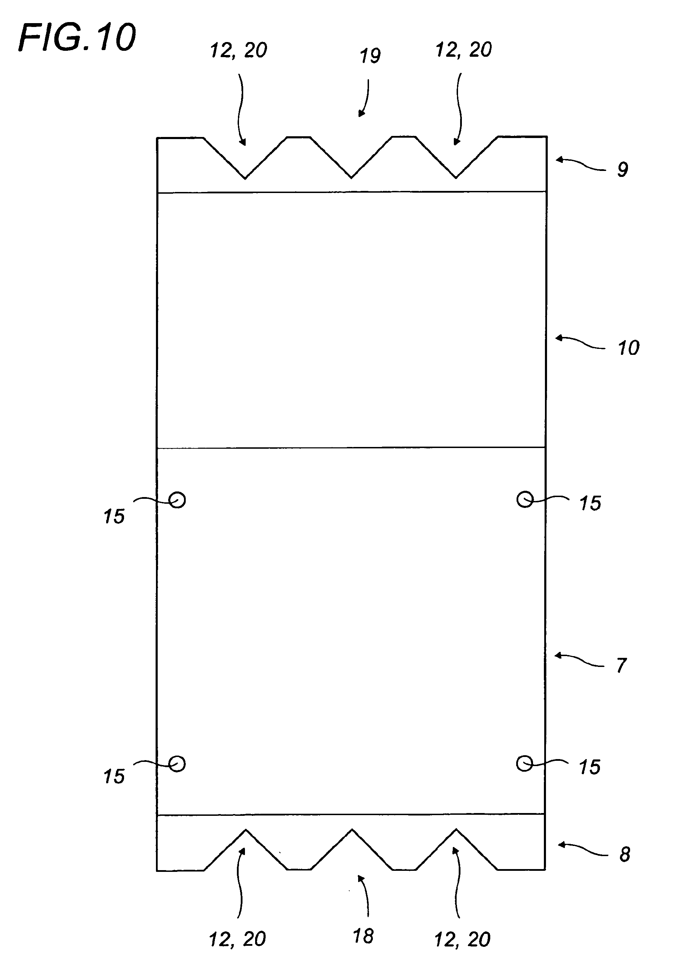

Le support de coffrage et de traversée selon la présente invention va maintenant être décrit de façon détaillée en référence aux figures 1 à 10. Les éléments équivalents représentés sur les différentes figures porteront les mêmes références numériques.

Le support de coffrage et de traversée 1 selon l'invention est destiné d'une part à former une structure de coffrage perdu au niveau d'une chape 2 armée par un treillis 3 couvrant une dalle 4 de bâtiment et d'autre part à constituer un support pour le changement de direction, le passage, le guidage et l'immobilisation de gaines, telles que 5, mais aussi de conduites, de canalisations et de câbles 6 de distribution de fluides et d'énergie dans un bâtiment depuis leur emplacement horizontal dans la chape 2, jusqu'à une présentation verticale de sortie de chape.

Ainsi, le support selon l'invention vient se placer au-dessus du treillis 3 d'armature de la chape 2 pour être noyé dans le béton léger constituant celle-ci comme le montre la vue en coupe de la figure 1.

Le support de coffrage et de traversée d'une paroi 1 selon l'invention est une pièce d'angle formée de volets successifs en tôle métallique ou en matière plastique, thermoformée ou injectée. Ces volets sont pliés selon une certaine inclinaison, par exemple à angle droit.

Un de ces volets, sensiblement horizontal, fait office de volet inférieur d'appui 7.

Un autre volet, sensiblement vertical, fait office de volet d'entrée 8 tandis qu'un autre volet, sensiblement horizontal, fait office de volet de sortie 9.

Le support de coffrage et de traversée 1 peut également comporter un ou plusieurs autres volets 10.

Au moins le volet d'entrée 8 et le volet de sortie 9 comportent chacun au moins une structure de guidage, d'appui et de calage 11 pour les gaines 5, conduits, canalisations ou câbles 6, par exemple sous la forme d'indentations triangulaires 12 permettant de maintenir des conduites, canalisations, câbles 6 et gaines 5 de différents diamètres.

Selon le nombre de volets que comporte le support 1 selon l'invention, plusieurs modes de réalisation sont envisageables.

Nous allons ici présenter deux modes de réalisation préférés de l'invention, une première variante perfectionnée comportant trois volets 7, 8, 9, et une seconde, présentant une structure simplifiée et qui comporte quatre volets 7, 8, 9, 10. Bien entendu, ces modes de modes de réalisation ne sont donnés qu'à titre d'exemple non limitatifs, et de nombreux autres modes de réalisation pourront être envisagés par l'homme du métier.

Le support de coffrage et de traversée 1 selon le premier mode de réalisation préféré de l'invention comporte trois volets. On distingue un volet inférieur d'appui 7 présentant par exemple deux ouvertures rectangulaires telles que 13 et 14 pour le passage à cet endroit de la masse de béton léger formant la chape 1 et une série de perforations telles que 15 à chaque angle pour le passage d'un moyen d'immobilisation par exemple un lien, une tige, une vis ou tout autre.

Les ouvertures rectangulaires telles que 13 et 14 permettent également d'alléger le poids d'ensemble du support et de faire des économies de matière.

La pièce se poursuit par un volet d'entrée 8 et un volet de sortie 9.

Tous ces volets sont de préférence perpendiculaires entre eux. Le premier, à savoir le volet d'appui 7, est horizontal, le second, à savoir le volet d'entrée 8, est vertical, et le troisième, à savoir le volet de sortie 9, est horizontal dans la position normale d'utilisation du support selon l'invention.

Les volets 8 et 9 présentent chacun au moins une ouverture de passage, préférentiellement de forme générale rectangulaire, respectivement 16 et 17, par exemple à coins coupés et comportant une structure de guidage, d'appui et de calage 11.

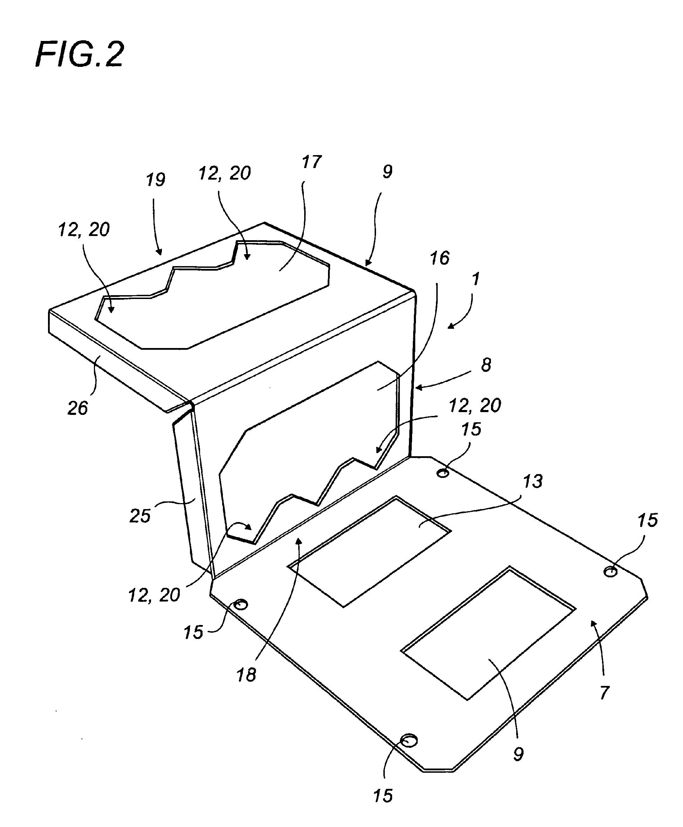

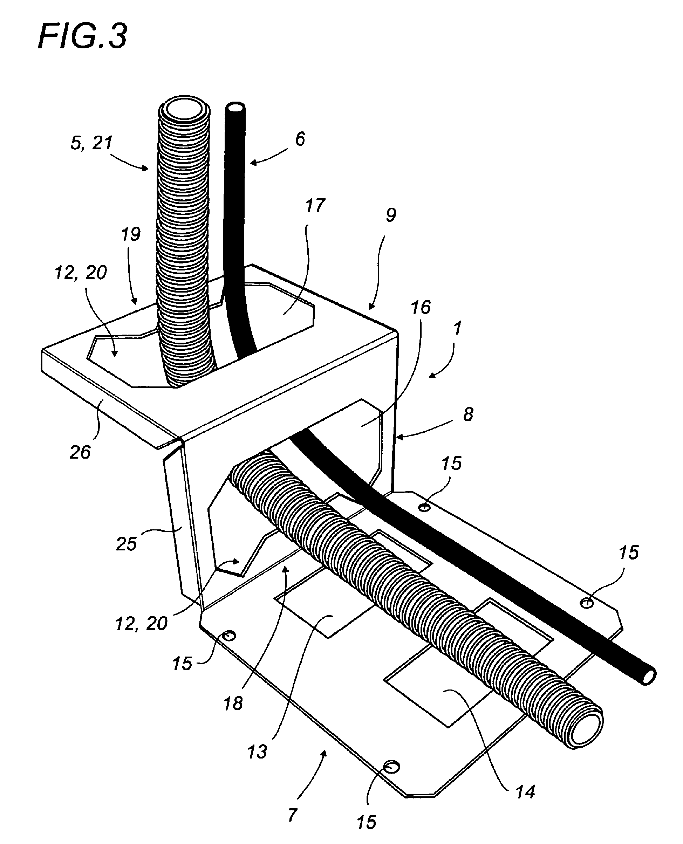

Dans ce premier mode de réalisation, la structure de guidage, d'appui et de calage 11 se présente préférentiellement sous la forme d'un bord de guidage, d'appui et de calage respectivement 18 et 19. Lorsque qu'on considère les figures 2 et 3, le bord de guidage, d'appui et de calage 18 du volet d'entrée 8 est préférentiellement un bord inférieur et le bord de guidage, d'appui et de calage 19 du volet de sortie 9 est préférentiellement un bord supérieur.

Ces bords de guidage, d'appui et de calage 18 et 19 présentent un profil crénelé ou denté formé d'une succession de plusieurs découpes individuelles réceptrices telles que 20 pour l'immobilisation à chaque fois d'un conduit, d'une canalisation ou d'un câble 6, ou d'une gaine cylindrique 5.

Les figures montrent comme exemple une gaine dite annelée 21, bien connue dans le bâtiment. Il s'agit d'une gaine formée d'une succession longitudinale d'anneaux ou de bourrelets tels que 22 séparés chacun par une partie lisse 23 de plus faible diamètre. Cette géométrie lui confère une flexibilité multidirectionnelle.

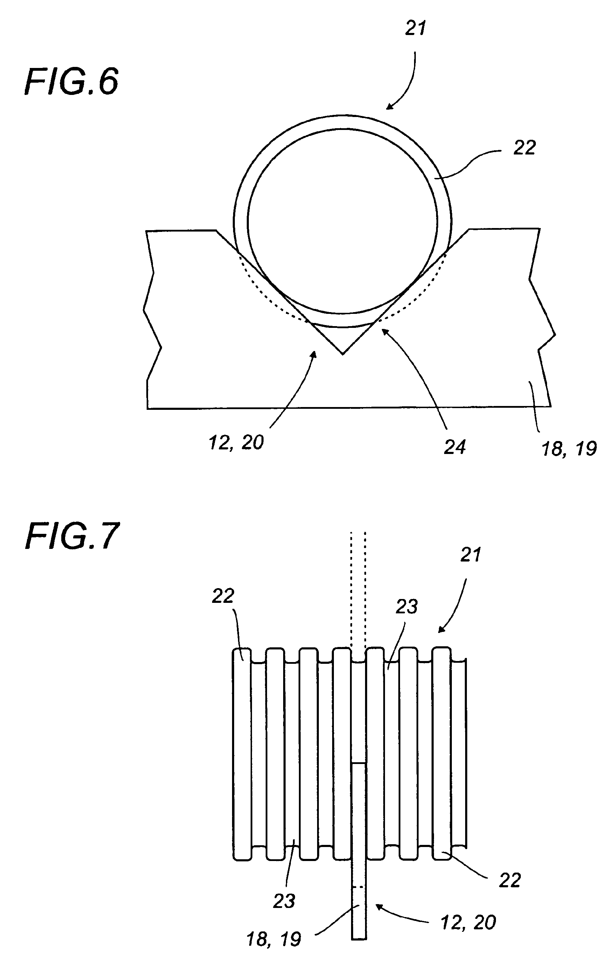

Concernant les découpes de guidage et de calage, il peut s'agir comme représenté sur les figures de découpes réceptrices 20 sous une forme 24 de découpe par exemple en "V" à pointe dirigée vers le bas ou de toute autre forme de découpes produisant les mêmes effets de guidage, d'appui, de calage et d'immobilisation, par exemple en auge ou en "U" ou tout autre. L'effet d'immobilisation est encore augmenté par le blocage provenant du bord de la tôle au niveau de la découpe venant s'encastrer entre deux anneaux successifs de la gaine annelée 21, comme représenté sur les figures 6 et 7.

Le volet supérieur ou le volet de sortie 9 présente par exemple le même bord d'appui et de calage 19 que son homologue vertical mais en situation opposée pour assurer, à chaque fois, le maintien à chacune des extrémités du coude constituant la partie incurvée de chaque gaine 5, conduit, canalisation ou câble 6 traversant le support de coffrage et de traversée d'une paroi 1 selon l'invention pour se retrouver en position verticale de sortie de chape.

Les volets 8 et 9 présentant au moins une ouverture de passage respectivement 16 et 17 comportent chacun le long de leurs bords latéraux un rabat respectivement 25 et 26 apportant une rigidité supplémentaire et pouvant servir de moyen de calage à la pièce de traversée contre une surface adjacente.

Le support 1 selon le second mode de réalisation préféré de l'invention comporte quatre volets 7, 8, 9, 10 de préférence sensiblement perpendiculaires entre eux. Comme dans le premier mode de réalisation préféré de l'invention, il comprend un volet inférieur d'appui 7 horizontal pouvant par exemple présenter une ou plusieurs ouvertures rectangulaires (non représentées) pour le passage à cet endroit de la masse de béton léger formant la chape 1 et une série de perforations telles que 15 à chaque angle pour le passage d'un moyen d'immobilisation.

La pièce se poursuit de chaque côté par un volet sensiblement à angle droit respectivement 8 et 10.

Le premier de ces volets est un volet d'entrée 8 sensiblement vertical dans la position normale d'utilisation du support selon l'invention. Ce volet d'entrée 8 présente une structure de guidage, d'appui et de calage 11 sous la forme d'un bord inférieur de guidage, d'appui et de calage 18 présentant un profil crénelé similaire à celui du premier mode de réalisation préféré de l'invention.

Le second de ces volets est un volet intermédiaire de liaison 10 sensiblement vertical dans la position normale d'utilisation du support selon l'invention. Ce volet intermédiaire de liaison 10 est quelconque et a pour but de servir de liaison entre le volet inférieur d'appui 7 et un volet de sortie 9 sensiblement horizontal.

Dans ce second mode de réalisation de l'invention, ce volet de sortie 9 est sensiblement similaire au volet d'entrée 8 et présente une structure de guidage, d'appui et de calage 11 similaire sous la forme d'un bord de guidage, d'appui et de calage 19 présentant un profil crénelé similaire à celui du premier mode de réalisation préféré de l'invention.

Comme dans le premier mode de réalisation de l'invention, le volet de sortie 9 peut présenter le même bord d'appui et de calage que son homologue vertical mais en situation opposée pour assurer, à chaque fois, le maintien à chacune des extrémités du coude constituant la partie incurvée de chaque gaine 5, conduit, canalisation ou câble 6 traversant le support de coffrage et de traversée d'une paroi selon l'invention pour se retrouver en position verticale de sortie de chape.

Dans ce second mode de réalisation préféré, les volets 8 et 9 se terminent chacun par une structure de guidage, d'appui et de calage 11 et ne présentent donc pas d'ouverture de passage 16, 17 comme dans le premier mode de réalisation. Les bords de guidage, d'appui et de calage 18, 19 de ces structures 11, grâce à leur profil crénelé ou denté permettent néanmoins d'immobiliser des conduits, des canalisations, des câbles 6 ou des gaines cylindriques 5.

Dans ce mode de réalisation préféré, cette immobilisation est améliorée si le volet d'entrée 8 est sensiblement à 95° par rapport au plan horizontal et si le volet de sortie 9 est sensiblement à 95° par rapport au plan vertical.

On remarque tout l'intérêt de l'invention qui permet de réaliser un passage de sortie à travers le béton léger d'une chape pour ces conduits, canalisations, câbles et gaines sans pour autant nécessiter la confection d'un coffrage.

Cette pièce de support est simple à fabriquer car il ne s'agit que de découpe et de pliage de tôle ou de fabrication d'une pièce en matière plastique.

De manière évidente, l'invention ne se limite pas aux seuls modes préférentiels de réalisation décrits précédemment et représentés sur les différentes figures, l'homme du métier pouvant y apporter de nombreuses modifications et imaginer d'autres variantes sans sortir du cadre de l'invention.

On peut par exemple envisager de former plusieurs ouvertures de passage dans le volet d'entrée et/ou celui de sortie, ces ouvertures étant alors situées l'une au-dessus de l'autre, et/ou l'une à côté de l'autre.

De même, ces ouvertures peuvent présenter n'importe quelle forme adaptée à l'immobilisation de gaines, canalisations, conduits ou câbles.

## Revendications

1. Support de coffrage et de traversée d'une paroi notamment d'une chape ou d'une dalle pour gaines (5), (21), canalisations, conduits ou câbles (6) d'un réseau de distribution les orientant dans une direction perpendiculaire à la direction d'origine, notamment d'une direction horizontale dans une direction verticale, **caractérisé en ce qu'**il se compose d'une seule pièce pliée ou conformée de manière à former plusieurs volets successifs et comportant au moins :
. un volet inférieur d'appui (7)
. un volet d'entrée (8), et
. un volet de sortie (9),
**en ce que** le volet d'entrée (8) et le volet de sortie (9) comportent chacun au moins une structure de guidage, d'appui et de calage (11) pour les gaines (5), conduits ou câbles (6) permettant de maintenir des gaines (5), (21), canalisations, conduits ou câbles (6) de différents diamètres et **en ce que** la structure de guidage, d'appui et de calage (11) se présente sous la forme d'un bord de guidage, d'appui et de calage respectivement (18, 19) à profil crénelé ou denté formé d'une succession de plusieurs découpes individuelles réceptrices (20) sous la forme d'indentations triangulaires (12).

2. Support selon la revendication 1, **caractérisé en ce que** les volets successifs sont sensiblement perpendiculaires entre eux.

3. Support selon la revendication 1, **caractérisé en ce qu'**il est constitué de quatre volets successifs (8, 7, 10, 9).

4. Support selon la revendication 1, **caractérisé en ce que** le volet d'appui (7) est une plaque présentant au moins une ouverture de passage de béton (13), (14) lors de sa coulée.

5. Support selon la revendication 1, **caractérisé en ce que** le volet d'appui (7) est une plaque présentant des passages (15) pour des moyens de fixation de la pièce à un support extérieur.

6. Support selon la revendication 1, **caractérisé en ce que** le volet d'entrée (8) présente au moins une ouverture de passage (16) et comporte une structure de guidage, d'appui et de calage (11).

7. Support selon la revendication 1, **caractérisé en ce que** le volet de sortie (9) présente au moins une ouverture de passage (17) et comporte une structure de guidage, d'appui et de calage (11).

8. Support selon l'une quelconque des revendications précédentes, **caractérisé en ce qu'**il est réalisé en tôle métallique.

9. Support selon l'une quelconque des revendications 1 à 7, **caractérisé en ce qu'**il est réalisé en matière plastique.

## Claims

1. Casing and conduit support of a wall in particular of a cover or a slab for channels (5); (21), canalizations, ducts or cables (6) of a distribution network, orienting them in a direction perpendicular to the original direction, in particular from a horizontal direction into a vertical direction, **characterized in that** it is made up of a single piece, bent or conformed in order to form several successive shutters and including at least:
• a lower support shutter (7)
• an entry shutter (8), and
• an exit shutter (9),
**in that** the entry shutter (8) and the exit shutter (9) each include at least one guide support and wedging structure (11) for the channels (5), ducts or cables (6) allowing to keep channels (5), (21), canalizations, ducts or cables (6) of different diameters, and **in that** the guide support and wedging structure (11) is in the form of a guide support and wedging edge respectively (18, 19) with notched or toothed profile, formed by a sequence of several individual reception cuts (20) in the form of triangular indentations (12).

2. Support according to claim 1, **characterized in that** the successive shutters are essentially perpendicular to each other.

3. Support according to claim 1, **characterized in that** it is composed of four successive shutters (8, 7, 10, 9).

4. Support according to claim 1, **characterized in that** the support shutter (7) is a plate presenting at least one concrete passage opening (13), (14) during its casting.

5. Support according to claim 1, **characterized in that** the support shutter (7) is a plate showing passages (15) for means for fastening the piece on an external support.

6. Support according to claim 1, **characterized in that** the entry shutter (8) presents at least one passage opening (16) and includes a guide support and wedging structure (11).

7. Support according to claim 1, **characterized in that** the exit shutter (9) presents at least one passage opening (17) and includes a guide support and wedging structure (11).

8. Support according to any of the preceding claims, **characterized in that** it is made of metallic sheet metal.

9. Support according to any of the claims 1 to 7, **characterized in that** it is made of plastic.

## Patentansprüche

1. Abschal- und Durchführungsstütze für eine Wand, vor allem einer Abdeckung oder einer Platte für Kanäle (5), (21), Kanalisierungen, Leitungen oder Kabel (6) eines Versorgungsnetzes, die sie senkrecht zur Ausgangsrichtung orientiert, vor allem von einer waagrechten in eine senkrechte Richtung, **gekennzeichnet dadurch, dass** sie aus einem einzigen Stück besteht, gebogen oder geformt, um mehrere aufeinanderfolgende Klappen zu bilden, mit mindestens:
• einer unteren Stützklappe (7)
• einer Eingangsklappe (8), und
• einer Ausgangsklappe (9),
**dadurch**, dass die Eingangsklappe (8) und die Ausgangsklappe (9) mindestens je eine Führungs-, Stütz- und Verkeilungsstruktur (11) für die Kanäle (5), Leitungen oder Kabel (6) enthalten, wodurch es möglich wird, Kanäle (5), (21), Kanalisierungen, Leitungen oder Kabel (6) von verschiedenen Durchmessern zu haben, sowie **dadurch**, dass die Führungs-, Stütz- und Verkeilungsstruktur (11) die Form eines Führungs-, Stütz- bzw. Verkeilungsrandes (18, 19) mit gerändeltem oder gezähntem Profil hat, gebildet aus einer Folge von mehreren individuellen Aufnahmeausschnitten (20) in Form von dreieckigen Verzahnungen (12).

2. Stütze nach Anspruch 1, **gekennzeichnet dadurch, dass** die aufeinanderfolgenden Klappen im wesentlichen lotrecht zueinander sind.

3. Stütze nach Anspruch 1, **gekennzeichnet dadurch, dass** sie aus vier aufeinanderfolgenden Klappen (8, 7, 10, 9) besteht.

4. Stütze nach Anspruch 1, **gekennzeichnet dadurch, dass** die Stützklappe (7) eine Platte ist, die bei ihrem Guss mindestens eine Betondurchgangsöffnung (13), (14) aufweist.

5. Stütze nach Anspruch 1, **gekennzeichnet, dadurch dass** die Stützklappe (7) eine Platte mit Durchführungen (15) für Mittel zur Befestigung des Stückes an einer äußeren Stütze ist.

6. Stütze nach Anspruch 1, **gekennzeichnet dadurch, dass** die Eingangsklappe (8) mindestens eine Durchgangsöffnung (16) aufweist und eine Führungs-, Stütz- und Verkeilungsstruktur (11) umfasst.

7. Stütze nach Anspruch 1, **gekennzeichnet dadurch, dass** die Ausgangsklappe (9) mindestens eine Durchgangsöffnung (17) und eine Führungs-, Stütz- und Verkeilungsstruktur (11) umfasst.

8. Stütze nach einem beliebigen der vorherigen Ansprüche, **gekennzeichnet dadurch, dass** sie aus Metallblech ist.

9. Stütze nach einem beliebigen der Patentansprüche 1 bis 7, **gekennzeichnet dadurch, dass** sie aus Kunststoff ist.
